# EUROPEAN PATENT APPLICATION

(11) **EP 1 708 193 A1**
(43) Date of publication of application: **04.10.2006**
(21) Application number: 04820249.3
(22) Date of filing: 09.12.2004
(51) Int. Cl.: G11B 20/10, H04N 5/91

(54) **DATA PROCESSOR**

(30) Priority: 12.12.2003 JP 2003414456
(71) Applicant: MATSUSHITA ELECTRIC INDUSTRIAL CO., LTD., Kadoma-shi, Osaka 571-8501 (JP)
(72) Inventor: NAKATSU, Etsuto c/o Matsushita El. Ind. Co, Ltd., Osaka-shi, Osaka 540-6319 (JP)
(74) Representative: Grünecker, Kinkeldey, Stockmair & Schwanhäusser Anwaltssozietät
(86) International application number: PCT/JP2004/018356
(87) International publication number: WO 2005/057577

(57) **Abstract**

To reduce the waste of the storage capacity of a storage medium as much as possible while realizing high-speed dubbing.

A data processor can write a data stream on each of storage media of first and second types and includes: a receiving section for receiving a first data stream; a converting section for converting the first data stream into a second data stream; a processing section for writing the first and second data streams on the first type of storage medium; a playback section for playing back a content based on the first data stream; and an instruction receiving section for receiving, from a user, an instruction on whether the content needs to be dubbed or not. If the user has instructed that the content be dubbed, the processing section reads the second data stream from the first type of storage medium, writes the second data stream on the second type of storage medium, and then deletes the second data stream from the first type of storage medium.

## Description

### TECHNICAL FIELD

The present invention relates to a technique of dubbing a content, which has been recorded on a storage medium for viewing and/or listening to it, onto another storage medium.

### BACKGROUND ART

Recently, devices for compressing and encoding video and/or audio (content) data and storing the data on a storage medium for future viewing and listening have become more and more popular. Those devices have gained such general popularity thanks largely to development of compression coding technologies and increase in the capacity of storage media.

As one such device, a DVD recorder with a built-in hard disk drive (HDD), of which the capacity has been increasing rapidly these days, is known. The HDD/DVD recorder will be simply referred to herein as a "recorder". Such a recorder is typically used as follows. For example, the user of the recorder gets TV programs recorded and stored on an HDD by utilizing the scheduled recording function of the recorder. He or she will view and listen to the programs later. If he or she has found any of them worth saving, then the person dubs the program onto a DVD and saves it there. As used herein, "to dub" means making a copy of a content, which has already been recorded on a storage medium, on another storage medium.

Among recent recorders, some can write a digital broadcasting transport stream on an HDD while maintaining its packet structure. In that case, when dubbed onto a DVD, the transport stream needs to be converted into a program stream, which is a recording format compatible with the DVD. More specifically, the recorder needs to once decode the transport stream that has been written on the HDD, encode it into a program stream again, and then write it on the DVD. This dubbing processing involves a decoding process and a re-encoding process and is hard to finish quickly. When a normal playback rate is regarded as a reference, the dubbing processing can be done either at the same rate as, or at approximately twice as high a rate as, the normal playback rate.

Patent Documents Nos. 1 and 2 disclose techniques of speeding up the dubbing processing. Specifically, according to Patent Document No. 1, a stream to dub, of which the format is compatible with the destination storage medium, is generated in advance separately from the transport stream being broadcast. Then, both streams are written on an HDD simultaneously. When dubbed, the stream to dub just needs to be copied and there is no need to perform the decoding and re-encoding processes. As a result, the dubbing processing can be speeded up.

According to Patent Document No. 2, a compressed and encoded data stream is generated from analog audiovisual data that has been extracted from an analog broadcast, for example. As in Patent Document No. 1, not only a normal data stream to view and listen to but also a stream to dub are generated and written on an HDD at the same time according to Patent Document No. 2, too. Consequently, as in the technique disclosed by Patent Document No. 1, the dubbing processing can be speeded up.
Patent Document No. 1: Japanese Patent Application Laid-Open Publication No. 2003-224822
Patent Document No. 2: Japanese Patent Application Laid-Open Publication No. 2003-32617

### DISCLOSURE OF INVENTION

### PROBLEMS TO BE SOLVED BY THE INVENTION

According to these conventional techniques, however, whenever a single program is recorded, two different streams are written on the HDD and then managed collectively after that, thus consuming a lot of storage capacity. As a result, compared to recording only a single stream on the HDD, the maximum recordable time decreases significantly. To increase the available capacity (i.e., the remaining capacity) of the HDD, the user has no choice but to delete that recorded program. In that case, however, the two streams, which are managed collectively, will be deleted at the same time. Then, the user won't be able to play the program for viewing or listen to it, to say nothing of dubbing it quickly.

An object of the present invention is to reduce the waste of the storage capacity of a storage medium as much as possible while realizing high-speed dubbing.

### MEANS FOR SOLVING THE PROBLEMS

A data processor according to the present invention has the ability to write a data stream on each of storage media of first and second types. First and second data streams in mutually different formats are allowed to be written on the first type of storage medium, while the second data stream is allowed to be written on the second type of storage medium. The data processor includes: a receiving section for receiving the first data stream; a converting section for converting the first data stream into the second data stream; a processing section for writing the first and second data streams on the first type of storage medium; a playback section for playing back a content based on the first data stream; and an instruction receiving section for receiving, from a user, an instruction on whether the content needs to be dubbed or not. If the user has instructed that the content be dubbed, the processing section reads the second data stream from the first type of storage medium, writes the second data stream on the second type of storage medium, and then deletes the second data stream from the first type of storage medium.

If the user has instructed that the content not be dubbed, the processing section may delete the second data stream from the first type of storage medium.

The data processor may further include a screen generating section for generating and outputting a particular screen to ask the user about the need of dubbing. The instruction receiving section may receive the instruction from the user after the user has been asked on the particular screen about the need of dubbing.

The screen generating section may output the particular screen after having superposed the particular screen on the content to play back.

The screen generating section may generate the particular screen when the content has been played back for the first time.

Unless the content starts to be played back within a predetermined amount of time after the first data stream has been written, the processing section may delete the second data stream.

The screen generating section may generate a particular screen that further includes an option of allowing the user to decide on the need of dubbing later.

If the instruction receiving section receives, from the user, an instruction that he or she will decide on the need of dubbing later, the processing section may register a content on hold on a list.

When the content that has been registered on the list has been played back, the processing section may generate the particular screen. If the user has instructed that the content not be dubbed, the processing section may delete the second data stream representing the content that has been played back.

When the remaining capacity of the first type of storage medium becomes equal to or smaller than a predetermined value, the processing section may delete the second data stream representing the content that has been registered on the list.

The first data stream may be an MPEG-2 transport stream, and the second data stream may be an MPEG-2 program stream.

A data processing method according to the present invention is designed to write a data stream on each of storage media of first and second types. First and second data streams in mutually different formats are allowed to be written on the first type of storage medium, while the second data stream is allowed to be written on the second type of storage medium. The method includes the steps of: receiving the first data stream; converting the first data stream into the second data stream; writing the first and second data streams on the first type of storage medium; playing back a content based on the first data stream; and receiving an instruction on whether the content needs to be dubbed or not. If it has been instructed that the content be dubbed, the step of writing may include reading the second data stream from the first type of storage medium, writing the second data stream on the second type of storage medium, and then deleting the second data stream from the first type of storage medium.

If it has been instructed that the content not be dubbed, the step of writing may include deleting the second data stream from the first type of storage medium.

The data processing method may further include the step of generating and outputting a particular screen to ask a user on the need of dubbing. The step of receiving the instruction may include receiving the instruction from the user after the user has been asked on the particular screen about the need of dubbing.

The step of generating and outputting the particular screen may include outputting the particular screen after having superposed the particular screen on the content to play back.

The step of generating and outputting the particular screen may include generating the particular screen when the content has been played back for the first time.

A computer program according to the present invention is executed by a computer including a data processor having the ability to write a data stream on each of storage media of first and second types. First and second data streams in mutually different formats are allowed to be written on the first type of storage medium, while the second data stream is allowed to be written on the second type of storage medium. The computer program is defined so as to make the data processor, in which the computer program has been installed, perform the steps of: receiving the first data stream; converting the first data stream into the second data stream; writing the first and second data streams on the first type of storage medium; playing back a content based on the first data stream; and receiving an instruction on whether the content needs to be dubbed or not. If it has been instructed that the content be dubbed, the step of writing may include reading the second data stream from the first type of storage medium, writing the second data stream on the second type of storage medium, and then deleting the second data stream from the first type of storage medium.

### EFFECTS OF THE INVENTION

According to the present invention, when a program is recorded, a stream to play for viewing and listening to and a stream to dub are recorded simultaneously, thus dubbing the recorded program onto another storage medium quickly. Besides, when the user finishes viewing and listening to the program by playing it, he or she is asked whether he or she wants to dub it. When an associated process is finished, the stream to dub will be deleted. As a result, the extra stream to dub stays on the device's own storage medium for a shorter period of time and the capacity of the built-in storage medium can be used more effectively.

### BRIEF DESCRIPTION OF DRAWINGS

FIG. **1** shows a configuration for a system that is made up of an optical disk recorder **10** according to a preferred embodiment of the present invention and other devices.
FIG. **2** shows the data structure of a transport stream (TS) **20.**
FIG. **3(a)** shows the data structure of a video TS packet **30** and FIG. **3(b)** shows the data structure of an audio TS packet **31.**
Portions **(a)** to **(d)** of FIG. **4** show the makeup of a stream when video pictures are played back from video TS packets.
FIG. **5** shows a data structure for an MPEG2 program stream **50.**
FIG. **6** shows the data structure of a video pack in the program stream **50.**
FIG. **7** shows an arrangement of functional blocks in a recorder **10** according to a first preferred embodiment.
Portions **(a)** through **(c)** of FIG. **8** show correlation between the data structures of a PS **79** and a TS **81.**
FIG. **9** is a flowchart showing the procedure of recording processing to be done by the recorder **10.**
FIG. **10** is a flowchart showing the procedure of playback processing to be done by the recorder **10.**
FIG. **11** is a flowchart showing the procedure of dubbing decision process to be done by the recorder **10.**
FIG. **12** shows a modified example of the recorder of the first preferred embodiment.
FIG. **13** shows an arrangement of functional blocks in a recorder **130** according to a second preferred embodiment.
FIG. **14** is a flowchart showing the procedure of a modified example of dubbing selection process to be done by the recorder **130** of the second preferred embodiment.
FIG. **15** shows an arrangement of functional blocks in a recorder **150** according to a third preferred embodiment.
FIG. **16** shows a modified example of the recorder of the third preferred embodiment.

### DESCRIPTION OF REFERENCE NUMERALS

- **1a**: TS input terminal
- **1b**: video/audio signal output terminal
- **2**: first read/write section
- **3**: first TS decoding section
- **4**: PS encoding section
- **5**: second TS decoding section
- **6**: dubbing selection screen superposing section
- **7**: second read/write section
- **8**: PS decoding section
- **9a**: HDD
- **9b**: DVD-RAM
- **9c**: memory card
- **10**: recorder
- **13**: tuner

### BEST MODE FOR CARRYING OUT THE INVENTION

Hereinafter, preferred embodiments of a data processor according to the present invention will be described with reference to the accompanying drawings. In the following description, the data processor is supposed to be a DVD recorder with a built-in hard disk drive (HDD).

### EMBODIMENT 1

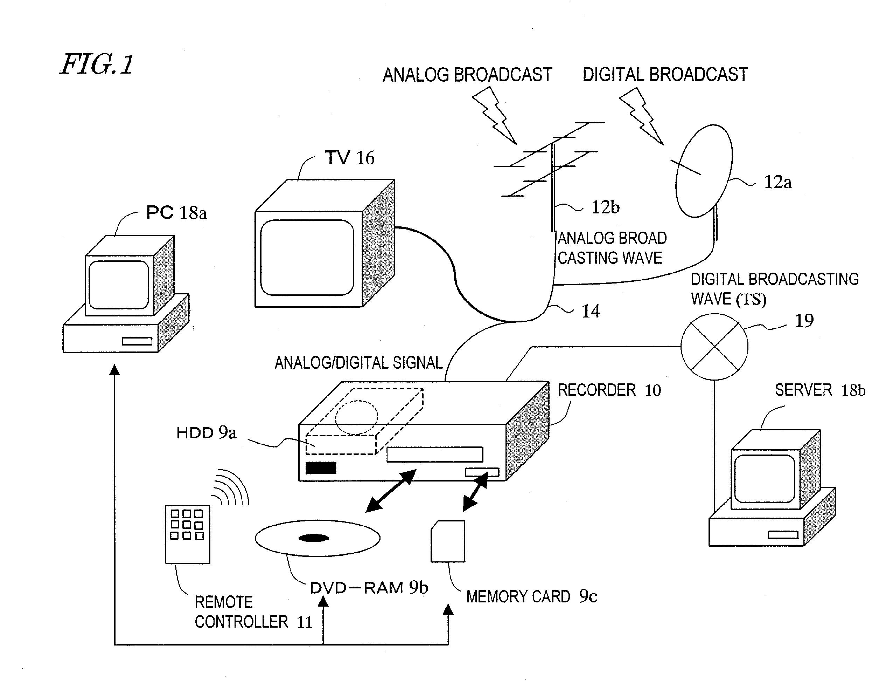

FIG. **1** illustrates a configuration for a system that is made up of an optical disk recorder **10** according to a preferred embodiment of the present invention and other devices. The optical disk recorder **10** with a built-in HDD **9a** (which will be simply referred to herein as a "recorder **10")** has a recording function, i.e., can record a moving picture data stream representing the video and audio of a broadcast program on the HDD **9a** and on a DVD-RAM **9a.** The recorder **10** also has a playback function, i.e., can read the data stream that has been recorded on the DVD-RAM **9b** and play back the moving picture. FIG. **1** shows other devices that can operate in conjunction with the recorder **100** to execute its recording and playback functions. The recorder **10** performs its recording and playback functions in response to an instruction that has been given by user through an input device such as a remote controller **11** or buttons (not shown) on the front side of the recorder **10.**

First, the processing to be done by the recorder 10 to execute its recording function will be described. The recorder **10** is connected to an antenna **12a** that receives a digital signal representing a digital broadcast program and to an antenna **12b** that receives an analog signal representing an analog broadcast program, and receives a digital broadcasting wave and an analog broadcasting wave. The recorder **10** may receive the digital signal and the analog signal through a coaxial cable **14,** for example.

The digital broadcasting wave has been transmitted as an MPEG-2 transport stream (which will be simply referred to herein as a "transport stream" or a "TS"). On receiving the TS, the recorder **10** performs predetermined processing on the TS and then records it on the HDD **9a** while maintaining its packet structure to be described later. In the meantime, the recorder **10** decodes and re-encoded the TS, thereby generating an MPEG-2 program stream (which will be referred to herein as a "program stream" or a "PS") representing the content and recording it on the HDD **9a,** too.

On receiving an analog signal, the recorder **10** extracts audiovisual data from the analog signal and compresses and encodes the data, thereby generating a TS and a PS at the same time and recording them on the HDD **9a.**

The recorder **10** can also dub the program that has been recorded on the HDD **9a** onto another storage medium. Specifically, the recorder **10** may either copy or move a PS that has been recorded on the HDD **9a** onto a DVD-RAM **9b** inserted or to a memory card **9c** such as an SD memory card or a memory stick™, thereby dubbing the recorded program. In the following description, "to dub" means making a copy of a content, which has already been recorded on a storage medium, onto another storage medium.

The recorder **10** is also connected to a network **19** such as the Internet and can communicate with other devices, including a server **18b,** over the network **19.** The server **18b** may be a commercial music server for storing various musical data in the linear PCM (LPCM) format and transmitting user's selected LPCM data to his or her device, for example. The recorder **10** may receive either a data file including musical data from the server **18b** or a streaming distribution of musical data.

Next, the processing to be done by the recorder **10** to execute its playback function will be described. The recorder **10** decodes the audio and video data of the TS that has been recorded on the HDD **9a** and plays back the data on a TV **16** and through loudspeakers (not shown). The DVD-RAM **9b** and memory card **9c** on which video and audio have been recorded may be removed from the recorder **10** and inserted into a PC **18a** or any other device. The audio and video data in the PS may be decoded by that device and reproduced on the display or through loudspeakers (not shown), for example.

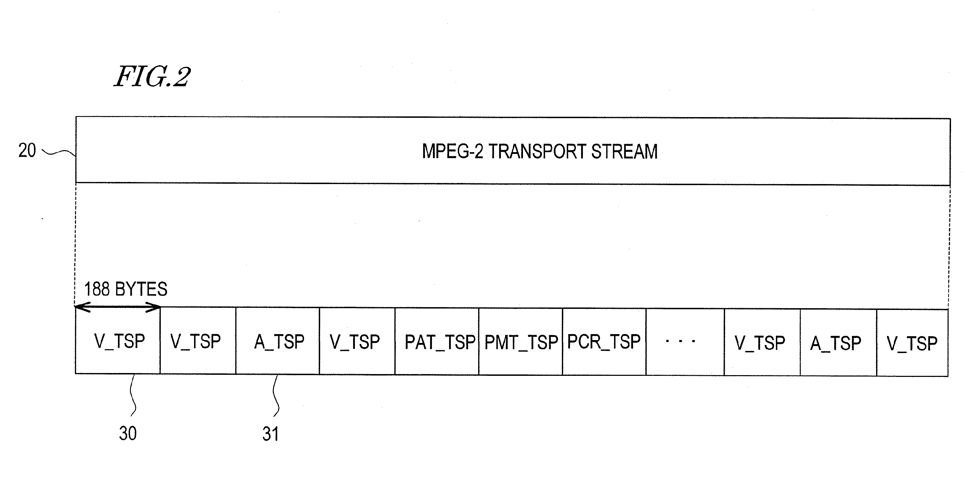

Hereinafter, the data structure of a transport stream to be transmitted as a digital broadcast signal will be described with reference to FIGS. **2** to **4.**

FIG. **2** shows the data structure of a transport stream (TS) **20.** Examples of TS packets include a video TS packet (V_TSP) **30** in which compressed video data is stored, an audio TS packet (A_TSP) **31** in which compressed audio data is stored, a packet (PAT_TSP) in which a program association table (PAT) is stored, a packet (PMT_TSP) in which a program map table (PMT) is stored, and a packet (PCR_TSP) in which a program clock reference (PCR) is stored. Each of these TS packets has a data size of 188 bytes.

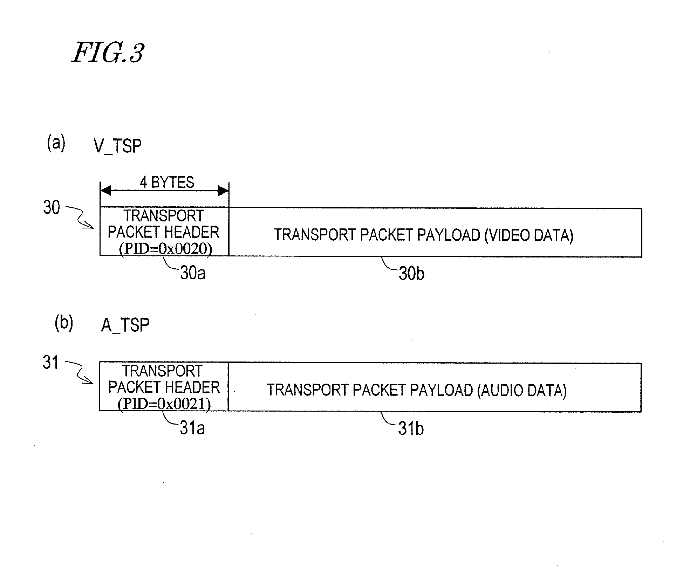

Hereinafter, the video TS packets and audio TS packets relating to the processing of the present invention will be described. FIG. **3(a)** shows the data structure of a video TS packet **30.** The video TS packet **30** includes a transport packet header **30a** of 4 bytes and a transport packet payload **30b** of 184 bytes. Video data **30b** is stored in the payload **30b.** On the other hand, FIG. **3(b)** shows the data structure of an audio TS packet **31.** The audio TS packet **31** also includes a transport packet header **31a** of 4 bytes and a transport packet payload **31b** of 184 bytes. Audio data **31b** is stored in the transport packet payload **31b.**

As can be seen from this example, a TS packet usually consists of a transport packet header of 4 bytes and elementary data of 184 bytes. In the packet header, a packet identifier (PID) showing the type of that packet is described. For example, the PID of a video TS packet is 0x0020, while that of an audio TS packet is 0x0021. The elementary data may be content data such as video data or audio data or control data for controlling playback. The type of data stored there changes according to the type of the packet.

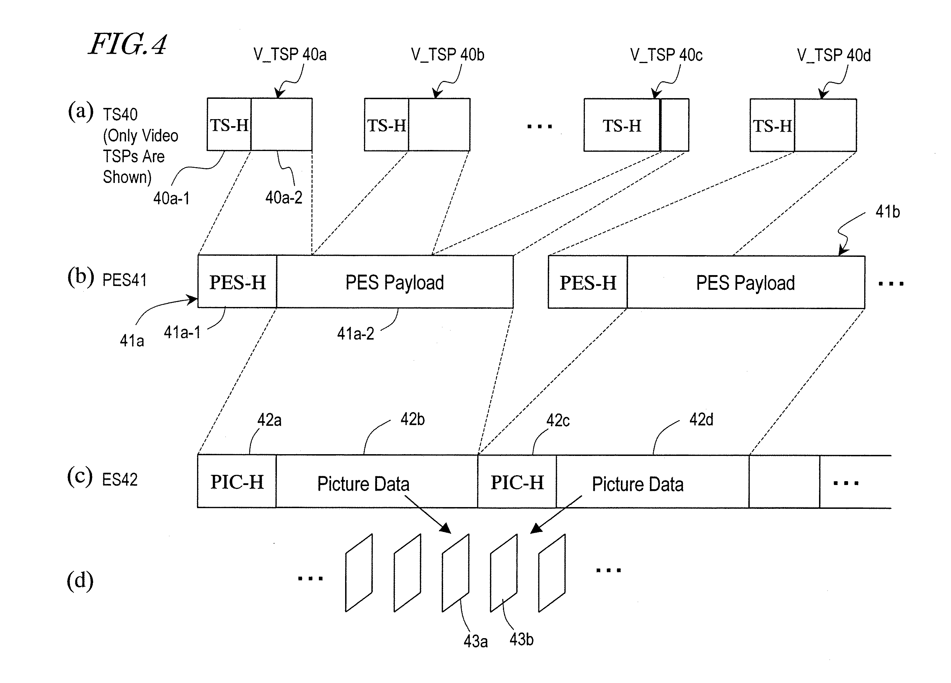

Hereinafter, a correlation between video data and pictures that make up the video will be described as an example. Portions **(a)** to (d) of FIG. **4** show the makeup of a stream when video pictures are played back from video TS packets. As shown in portion **(a)** of FIG. **4,** this TS **40** includes video TS packets **40a** through **40d.** Although the TS **40** may include other packets, only those video TS packets are shown here. A video TS packet can be easily identifiable by the PID stored in its header **40a-1.**

A packetized elementary stream is made up of the video data of respective video TS packets such as the video data **40a-2.** Portion **(b)** of FIG. **4** shows the data structure of a packetized elementary stream (PES) **41.** The PES **41** includes a plurality of PES packets **41a, 41b,** etc. The PES packet **41a** is made up of a PES header **41a-1** and a PES payload **41a-2.** These data are stored as the video data of the video TS packets.

Each PES payload **41a-2** includes the data of a single picture. An elementary stream is made up of those PES payloads **41a-2.** Portion **(c)** of FIG. **4** shows the data structure of an elementary stream (ES) **42.** The ES **42** includes multiple pairs of picture headers and picture data. It should be noted that the "picture" is generally used as a term that may refer to either a frame or a field.

In the picture header **42a** shown in portion **(c)** of FIG. **4,** a picture coding type, showing the picture type of the following picture data **42b,** is described. In the same way, a picture coding type, showing the picture type of the following picture data **42d,** is described in the picture header **42c.** The "type" is one of an I-picture (intra-coded picture), a P-picture (predictive-coded picture) and a B-picture (bidirectionally-predictive-coded picture). If the type shows this is an I-picture, its picture coding type may be "001b", for example.

The picture data **42b, 42d,** etc. is data corresponding to a single frame, which may consist of either that data only or that data and preceding/succeeding data to be decoded before and/or after the former data. For example, portion **(d)** of FIG. **4** shows a picture **43a** consisting of the picture data **42b** and a picture **43b** consisting of the picture data 42d.

In playing back video based on a TS, the recorder **10** gets video TS packets, extracts picture data through the processing described above, and gets pictures that form the video. As a result, the video can be presented on the TV **16.**

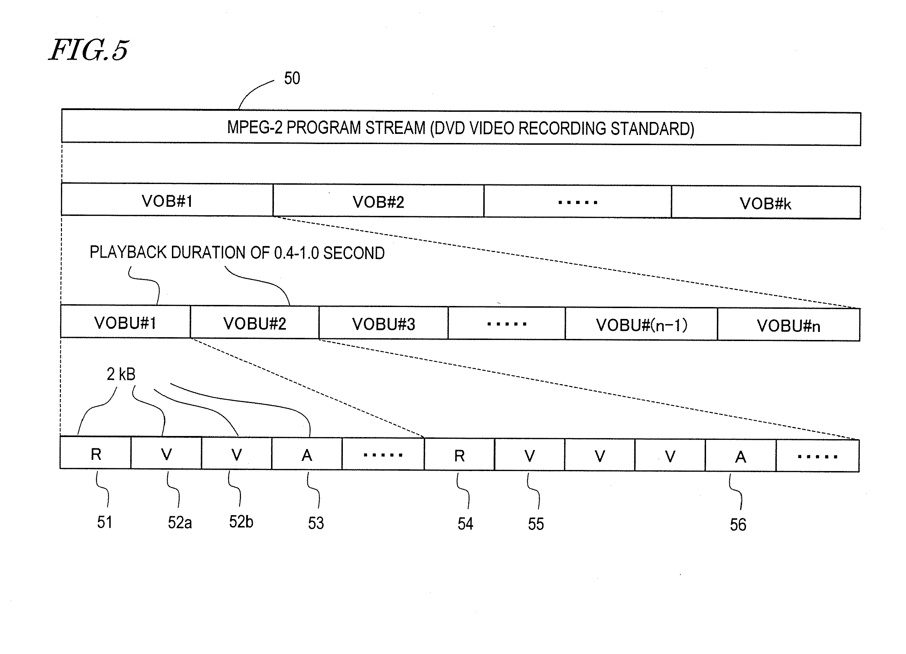

FIG. **5** shows a data structure for an MPEG2 program stream **50** compliant with the DVD Video Recording standard (which will be referred to herein as the "VR standard"). Such a stream will be referred to herein as a "program stream **50".**

The program stream **50** includes a plurality of video objects (VOBs) #1, #2, ..., and #k. Supposing the program stream **50** is a recorded content, for example, each VOB stores moving picture data that was generated during a single video recording session (i.e., since the user started recording the video and until he or she stopped doing it).

Each VOB includes a plurality of VOB units (VOBUs) #1, #2, ..., and #n. Each VOBU is a data unit containing data with a video playback duration of about 0.4 seconds to about 1 second. Hereinafter, the data structure of VOBUs will be described with the first and second video object units VOBU #1 and VOBU #2 taken as an example.

VOBU #1 is composed of a number of packs. In the program stream **50,** each pack has a fixed data length (also called a "pack length") of 2 kilobytes (i.e., 2,048 bytes). At the top of the VOBU, a real time information pack (RDI pack) **51** is positioned as indicated by "R" in FIG. **5.** The RDI pack **51** is followed by multiple video packs "V" (including video packs **52a** and **52b)** and multiple audio packs "A" (including audio pack **53).**

Each pack stores the following information. The RDI pack **51** stores various information for controlling the playback of the program stream **50,** e.g., information representing the playback timing of the VOBU and information for controlling copying of the program stream **50.** The video packs **52a, 52b** store MPEG2-compressed video data thereon. The audio packs 53 store audio data that was compressed so as to comply with the MPEG2 Audio standard, for example. In adjacent video and audio packs, video and audio data to be played back synchronously with each other may be stored. However, those packs may be arranged in any order.

VOBU #2 is also made up of a plurality of packs. An RDI pack **54** is placed at the top of VOBU #2, and then followed by a plurality of video packs **55** and a plurality of audio packs **56.** The contents of the information to be stored in each of these packs are similar to those of VOBU #1.

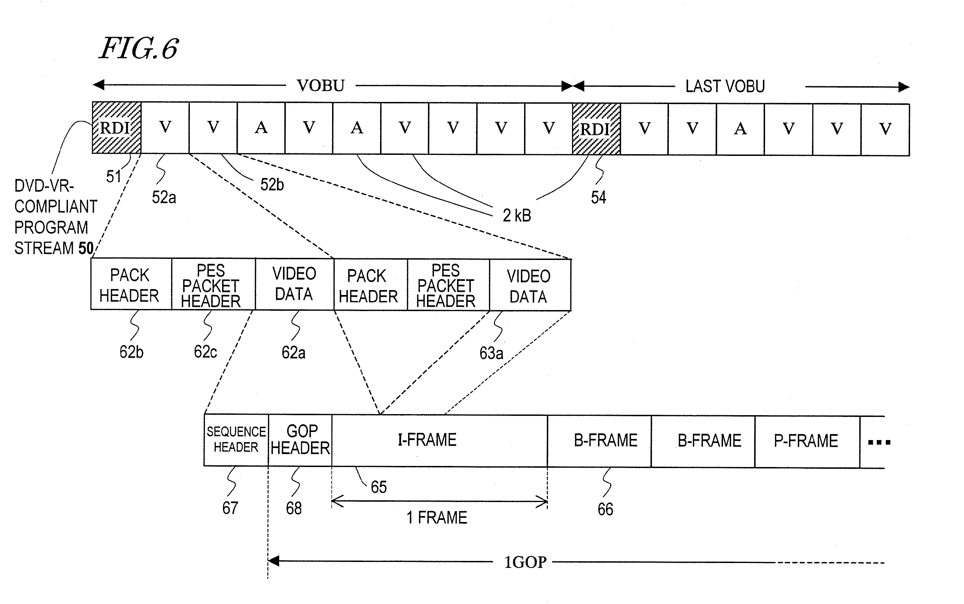

FIG. 6 shows the data structure of a video pack in the program stream **50.** Hereinafter, the video pack **52a** will be taken as an example. The video pack **52a** stores MPEG2-compressed video data **62a** therein. The video pack **52a** further includes a pack header **62b** and a PES packet header **62c** showing the identity as a video pack. Also, if the video pack **52a** is the first one of the VOBU, a system header (not shown) is further included in the pack header **62b.**

The video data **62a** of the video pack **52a** shown in FIG. **6,** with the video data **63a** and so on of the following video packs **52b,** etc., make up the data of an I-frame **65.** After the I-frame, video packs making up a B-frame **66** or a P-frame are recorded continuously.

The video data **62a** further includes a sequence header **67** and a GOP header **68.** The MPEG2 standard defines a "group of pictures (GOP)" as a group of video frames. The GOP header **68** indicates the top of each GOP. The first frame of each GOP is always an I-frame.

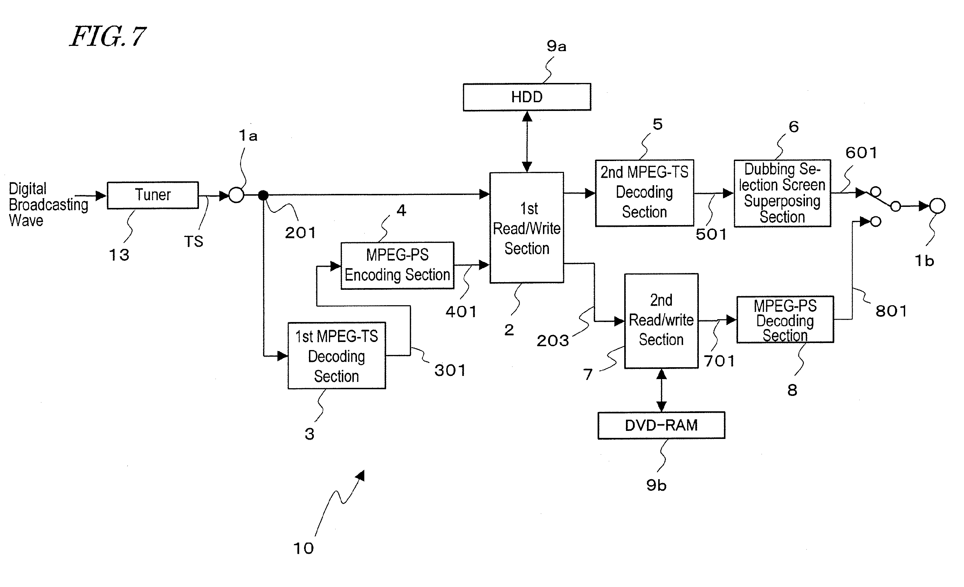

Hereinafter, a configuration for the recorder **10** of this preferred embodiment will be described with reference to FIG. **7,** which shows an arrangement of functional blocks in the recorder **10** of this preferred embodiment.

The recorder **10** includes a TS input terminal **1a,** a video/audio signal output terminal **1b,** a first read/write section **2,** a first MPEG-TS decoding section **3,** an MPEG-PS encoding section **4,** a second MPEG-TS decoding section **5,** a dubbing selection screen superposing section **6,** a second read/write section **7,** an MPEG-PS decoding section **8,** an HDD **9a** and a tuner **13.** The DVD-RAM **9b** shown in FIG. **7** is removable from the recorder **10** and does not have to be regarded as a component of the recorder **10.**

Hereinafter, the functions of the respective components of the recorder **10** will be described one by one and then the operations (i.e., recording and playback operations) of the recorder **10** as a whole will be set forth. In this preferred embodiment, it will be described what processing is done by the recorder **10** that has received a digital broadcasting wave. The processing to be done by the recorder **10** that has received an analog broadcasting wave will be described for the second preferred embodiment.

The TS input terminal **1a** receives a transport stream (TS) from the tuner **13.** The video/audio signal output terminal **1b** outputs a video and audio baseband signal that has been supplied from either the dubbing selection screen superposing section **6** or the PS decoding section **8.** Based on this signal, video is presented on the TV **16** and audio is reproduced through the loudspeakers.

The first read/write section **2** performs various types of processing to write the TS on the HDD **9a,** including specifying an address on the HDD **9a,** giving an instruction to move the magnetic head (not shown) of the HDD **9a,** making an error correction, outputting the TS and giving an instruction to start writing the TS at the specified address.

The first TS decoding section 3 decodes the TS and outputs a digital signal (i.e., a baseband signal) representing video and/or audio. As far as video is concerned, the first TS decoding section **3** extracts picture data (i.e., frame data) from the TS **40** following the data structure shown in FIG. **4.** Also, the first TS decoding section **3** decodes the respective frame data that have been compressed and encoded compliant with the MPEG-2 standard, thereby outputting a video signal as a baseband signal on a frame-by-frame basis.

The PS encoding section **4** receives the video/audio baseband signal, thereby generating a PS based on the signal. As for video, the PS encoding section **4** compresses and encodes the baseband signal compliant with the MPEG-2 standard, thereby generating frame data. Then, the encoding section **4** adds various types of headers to the frame data following the data structure shown in FIG. **6** to generate video packs. Thereafter, the PS encoding section **4** combines the video packs with audio packs that have been generated separately, and adds an RDI pack to their top, thereby generating a PS 50.

If the TS **201** is program data of standard definition video (SD video), then the PS encoding section **4** generates a PS including video of the same definition. On the other hand, if the TS **201** is program data of high definition video (HD video), then the PS encoding section **4** converts the baseband signal representing the HD video into a baseband signal representing SD video by decimating the data, for example, thereby generating a PS. For example, the PS encoding section **4** generates a PS representing SD video with a data rate of 5 Mbps from a TS representing HD video with a data rate of 24 Mbps.

The second TS decoding section **5** has substantially the same function as the first TS decoding section **3.** That is to say, the second TS decoding section **5** receives and decodes a TS and outputs a digital signal representing video and/or audio (as a baseband signal). The detailed function of the second TS decoding section **5** is just as already described for the first TS decoding section **3** and the description thereof will be omitted herein. In this preferred embodiment, the second TS decoding section **5** is supposed to receive a TS that has been read from the HDD **9a.** That is to say, the second TS decoding section **5** operates when the user views and listens to a program recorded. If the user is viewing and listening to a digital broadcast in real time, the TS decoding section **5** may receive a TS either by way of the first read/write section **2** or from the TS input terminal **1a** directly and decode it.

The dubbing selection screen superposing section **6** generates a particular screen that asks whether dubbing is needed or not. Also, the dubbing selection screen superposing section **6** outputs a signal in which the particular screen has been superposed on output video. This is a type of processing to be done to realize a so-called "on screen display" function. The screen to be superposed includes a question for the user about whether or not he or she wants to dub a recorded program that has just been viewed and listened to and its potential answers. For example, a screen including the question and answers "Do you want to dub the program you have just finished? (1) Yes (2) No" is presented. In this preferred embodiment, only when the user finishes viewing and listening to a recorded program by playing it, the dubbing selection screen superposing section **6** is supposed to superpose the screen that asks about the need of dubbing. That is why the dubbing selection screen superposing section **6** is supposed to perform the superposing processing when the user finishes viewing and listening to the recorded program by playing it.

The second read/write section **7** has substantially the same function as the first read/write section **2** except that the second read/write section **7** has to process a different type of storage media and is designed differently due to that difference. Specifically, the second read/write section **7** receives the PS that has been read from the HDD **9a** from the first read/write section **2** and then performs various types of processing to write the PS on the DVD-RAM **9b,** including specifying an address on the DVD-RAM **9b,** giving an instruction to move an optical head (not shown) for the DVD-RAM **9b,** making an error correction, outputting the PS and giving an instruction to start writing the PS at the specified address.

The PS decoding section **8** receives and decodes the PS that has been read from the DVD-RAM **9b,** thereby outputting a digital signal representing video and/or audio as a baseband signal. This processing is the inverse of the compression coding processing performed by the PS encoding section **4.** For example, the PS decoding section **8** extracts frame data of compressed and encoded video from the video packs of the PS following the data structure shown in FIG. **6,** decodes the frame data and outputs a baseband signal.

The tuner **13** receives a digital broadcasting wave and gets a TS. The TS may include the data of multiple programs that have respectively different identifiers (program IDs). That is why by reference to the program ID of the program that has been selected by the user, the tuner **13** extracts video packets, audio packets and so on that are needed for viewing and listening to that program and outputs a TS that is different from the received TS. The output TS includes virtually only the data about the program selected and no data about the other non-selected programs. For that reason, the TS output from the tuner **13** is sometimes called a "partial TS".

Hereinafter, the operations of the recorder **10** as a whole will be described. In the following example, the recording and playback operations of the recorder **10** will be described in this order.

First, it will be described how the recorder **10** operates in recording a program. The tuner **13** extracts only the packets of a program to be recorded (which will be referred to herein as a "content") from the transport stream that has been transmitted as digital broadcasting wave and outputs them. The TS input terminal **1a** receives the TS **201** that has been output from the tuner **13.** Then, the first read/write section **2** performs recording-related processing on the TS **201** and then writes it on the HDD **9a.**

While the TS is being subjected to the recording-related processing, the TS is also converted into a PS. More specifically, the first TS decoding section **3** decodes the TS **201,** thereby outputting the video/audio signal (baseband signal) **301.** Next, the PS encoding section **4** generates a PS based on the video/audio signal **301.** Then, the first read/write section **2** performs recording-related processing on the PS **401** and writes it on the DVD-RAM **9b.** Thus, the first TS decoding section **3** and the PS encoding section **4** may be called a stream converting section for converting a TS into a PS.

It is in order to get dubbing done quickly that a PS is generated from the TS and the TS and the PS are both stored on the HDD **9a.** When dubbing is performed on the DVD-RAM **9b,** the TS is not allowed to be written on the DVD-RAM **9b,** and therefore, a PS must have been generated. That is why by generating a PS in advance while recording a program, the dubbing processing can be done more quickly than converting the TS into a PS during dubbing.

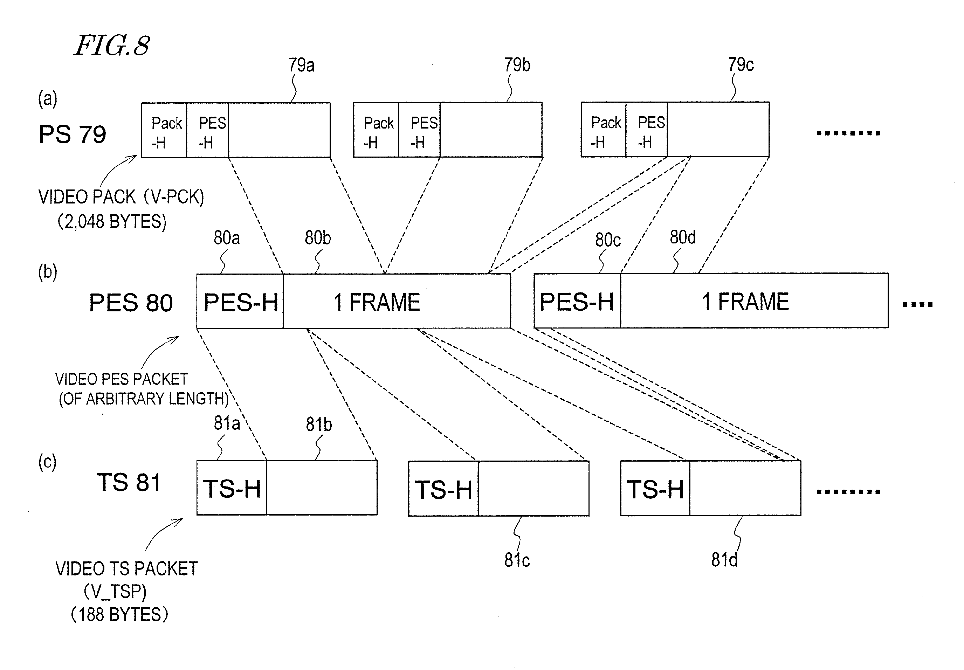

It should be noted that if the video/audio data in the TS complies with the DVD standard, then the TS does not have to be decoded into the baseband signal **301** but may be converted into a PS as the encoded data. Portions **(a)** through **(c)** of FIG. **8** show correlation between the data structures of a PS **79** and a TS **81.** First, looking at the TS **81** shown in portion **(c),** it can be seen that the data of the payloads **81b, 81c** and **81d,** extracted from the respective TS packets of the TS **81** by removing the headers **81a,** etc., form the PES **80** shown in portion **(b).** Meanwhile, the data of the payloads **80b** and 80d, extracted from the respective PES packets of the PES **80** by removing the headers **80a, 80c,** etc. and forming an elementary stream (ES), are embedded separately in the payloads **79a, 79b, 79c** of the video packs of the PS **79.** The ES is frame-by-frame data that has been encoded compliant with the MPEG-2 standard. If a PS is generated from a TS without decoding the TS, then the image quality will not be debased.

It can be determined by the elementary stream (ES) representing video and/or audio whether or not the video/audio data in the TS complies with the DVD standard. The following Table 1 shows exemplary video ES parameters that are defined by digital broadcast and DVD standards:

**Table 1**

| Video ES parameters | Broadcast stream (terrestrial digital) | DVD stream (DVD-VR) |
|---|---|---|
| Coding method | MP@HL, MP@14L, MP@ML, MP@LL | MP@ML, SP@ML |
| Bit rate | 15 Mbps or less for MP@ML | 9.8 Mbps or less |
| Header structure at the top of GOP | Sequence header+ (GOP header+) I-picture (frame) header | Sequence header+ GOP header+I-picture (frame) header |
| Picture size (H×V) on SD video compatible TV | 720×480 | 720×480 |
| | | 704×480 |
| | 544×480 | 544×480 |
| | 480×480 | 480×480 |
| | | 352 × 480 |
| | | 352 × 240 |
| Number of streams | Any | One |

The video ES structure in a TS of a digital broadcasting is generated based on various parameters that are defined in the column "broadcasting stream". If the video ES has the same structure as that defined in the column "DVD stream", then the ES may be regarded as complying with the DVD standard. If their structures are different, however, the ES cannot be regarded as complying with the DVD standard. For example, if the ES is either an MP@HL stream or an MP@ML stream with a bit rate exceeding 9.8 Mbps, then the video ES does not comply with the DVD standard.

As for audio, the DVD standard adopts only linear PCM, AC-3 and MPEG formats. That is why if an audio ES in a TS has one of these structures, then the audio ES may be regarded as complying with the DVD standard. However, if the audio ES is none of these (e.g., if it is in the AAC format), then the audio ES cannot be regarded as complying with the DVD standard.

If there are any video and audio that do not comply with the DVD standard, then the data may be converted into a PS by using the first TS decoding section **3** and the PS encoding section **4** described above.

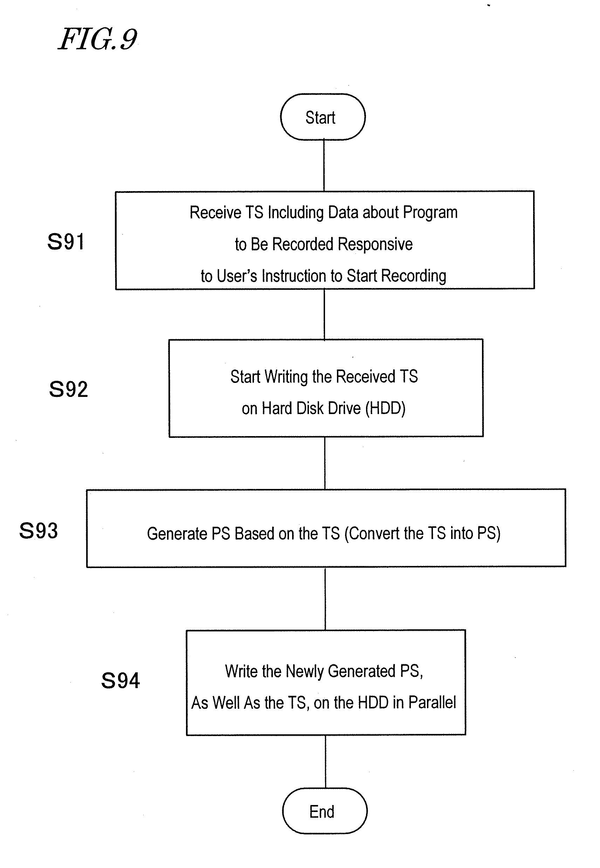

The procedure of the recording processing described above may be summarized as shown in FIG. **9,** for example. FIG. **9** shows the procedure of the recording processing to be done by the recorder **10.** First, in Step **S91,** in response to a user's instruction to start recording, the tuner **13** receives a TS including the data about a program to be recorded and sends the data to the first read/write section **2** and to the first TS decoding section **3.** Next, in Step **S92,** the first read/write section **2** starts writing the TS on the HDD **9a.** Then, in Step **S93,** the first TS decoding section **3** and the PS encoding section **4** generate a PS based on the TS (i.e., convert the TS into a PS). Finally, in Step **S94,** the first read/write section **2** writes the newly generated PS, as well as the TS, on the HDD **9a** in parallel with each other.

Next, it will be described with reference to FIG. **7** again how the recorder **10** operates in playing a program for viewing and listening. At this point in time, a TS and a PS have been recorded on a program-by-program basis on the HDD **9a.** To play a program for viewing and listening to it, the first read/write section **2** reads a TS from the HDD **9a,** performs playback-related processing on the TS, and then outputs the TS **202.** The second TS decoding section **5** decodes the TS **202,** thereby outputting a video/audio signal **501.**

The dubbing selection screen superposing section **6** receives the video/audio signal **501.** Only when the user finishes viewing and listening to a recorded program, for which a TS and a PS have been both recorded, the dubbing selection screen superposing section **6** generates a video/audio signal **601,** in which a screen to prompt the user to decide whether he or she wants to dub the program is superposed on the video signal, and outputs the signal **601** through the video/audio signal output terminal **1b.**

Looking at the dubbing selection screen presented on the TV **16,** the user picks his or her desired option of processing with the remote controller **11,** for example. If the user has picked the option of "dubbing needed", the first read/write section **2** reads the PS that has been stored on the HDD **9a,** and outputs it as a PS **203** to the second read/write section **7.** In response, the second read/write section **7** performs recording-related processing on the PS **203** and then writes it on the DVD-RAM **9b.** The PS has already been stored on the HDD **9a** in advance. That is why this series of dubbing processing steps is virtually data copying processing for transferring the PS from the HDD **9a** to the DVD-RAM **9b.** Thus, no stream analysis processing is needed and the dubbing processing can be done much faster than the situation where decoding and re-encoding processes need to be performed.

By using the recorder **10,** the user can also play the program that has been dubbed onto the DVD-RAM **9b** for viewing and listening to it. In that case, the second read/write section **7** reads a PS from the DVD-RAM **9b,** performs playback-related processing on the PS and then outputs a PS **701.** The MPEG-PS decoding section **8** decodes the PS **701** and outputs a video/audio signal **801.** As a result, the video/audio signal **801** is output through the video/audio signal output terminal **1b** and video and audio are played back on the TV **16** and through loudspeakers, for example.

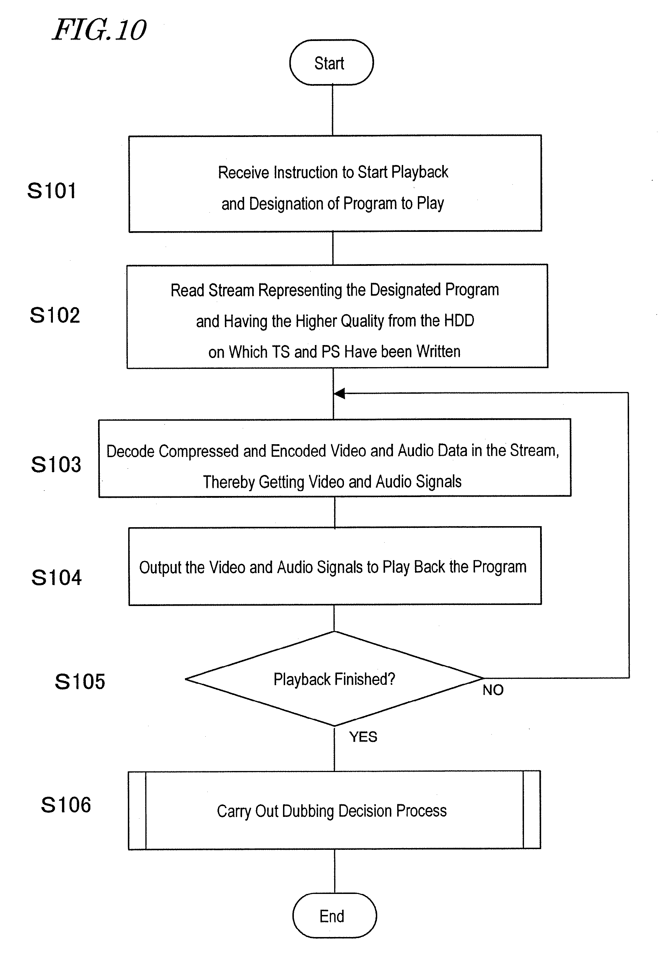

The principal procedure of the playback processing described above is summarized in FIG. **10,** which shows the procedure of playback processing to be done by the recorder 10. First, in Step **S101,** the recorder **10** receives a user's instruction to start playback and his or her designation of a program to play back through the remote controller **11.** Next, in Step **S102,** the first read/write section **2** reads a stream representing the designated program and having the higher quality from the HDD **9a** on which a TS and a PS have been written. In this preferred embodiment, the first read/write section **2** reads the TS having higher quality than the PS from the HDD **9a.** As can be understood from the foregoing description, the video and audio quality of the PS, generated by converting the TS, never exceeds (i.e., equal to or inferior to) that of the TS. That is why by always choosing the TS, a stream having the higher playback quality can be read.

Next, in Step **S103,** the second TS decoding section **5** decodes the compressed and encoded video and audio data in the stream, thereby getting a video signal and an audio signal. Thereafter, in Step **S104,** the second TS decoding section **5** outputs the video signal and the audio signal. Then, these signals are sent to an external device outside of the recorder **10** by way of the dubbing selection screen superposing section **6** and the video/audio signal output terminal **1b.** As a result, the program starts to be played back.

Subsequently, in Step S105, the first read/write section **2** determines whether or not every data has been presented. If the answer is NO, the first read/write section **2** continues to read the TS from the HDD **9a** and the second TS decoding section **5** performs the processing step S103 and the following process steps all over again. On the other hand, if the answer is YES, then the process advances to Step S106.

In Step **S106,** the first read/write section **2** performs a dubbing decision process. When the process is finished, the playback processing ends, too.

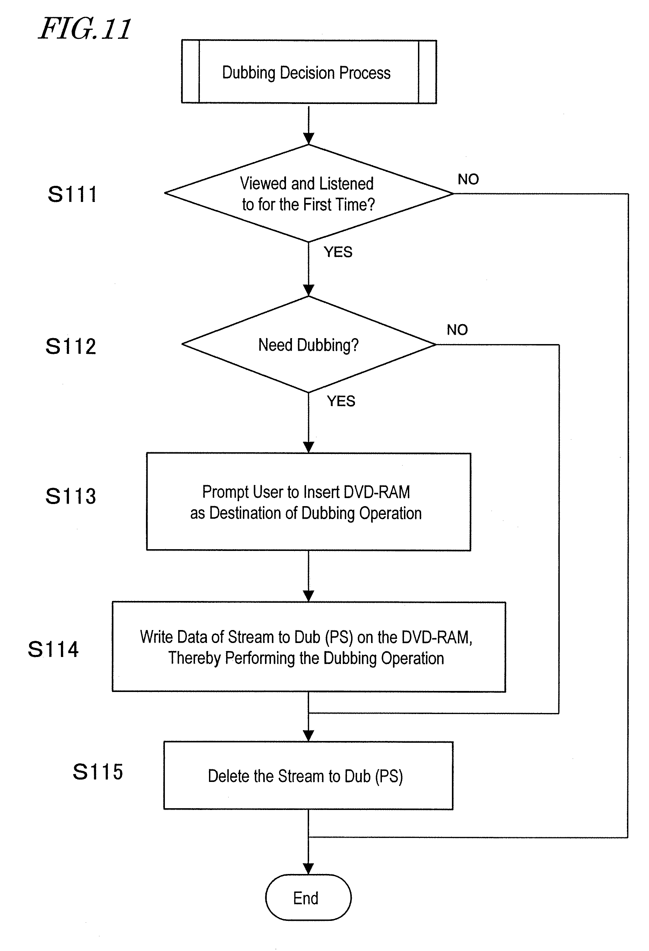

Hereinafter, the dubbing decision process to be carried out in Step **S106** shown in FIG. **10** will be described in detail and more fully with reference to FIG. **11.**

FIG. **11** shows the procedure of the dubbing decision process. First, in Step **S111,** the first read/write section **2** determines whether or not the program being played is being viewed and listened to for the first time. If the answer is YES, the process advances to Step **S112.** On the other hand, if the program has ever been viewed and listened to, then the dubbing decision process ends. The history of playback for viewing and listening can be checked easily by writing data showing the history in association with the TS on the HDD **9a.**

Next, in Step **S112,** when the user finishes viewing and listening to the program, the dubbing selection screen superposing section **6** outputs a dubbing selection screen onto the TV screen to ask the user about the need of dubbing. On the dubbing selection screen, the user is prompted to choose either "dubbing needed" or "dubbing not needed" using a remote controller, for example. If the user opts for "dubbing needed", the process advances to Step **S113.** On the other hand, if he or she chooses "dubbing not needed", then the process advances to Step **S115.**

In Step **S113,** the dubbing selection screen superposing section **6** changes the contents of the display screen and prompts the user to insert a DVD-RAM **9b** as the destination of the dubbing operation. When it is confirmed that the DVD-RAM **9b** has been inserted, the first read/write section **2** reads a PS from the HDD **9a** and sends it to the second read/write section **7,** which writes the PS on the DVD-RAM **9b** in Step **S114.** As a result, the dubbing processing is carried out. Optionally, the second read/write section 7 may see if the DVD-RAM **9b** has been inserted as the destination of the dubbing operation and may prompt the user to insert it only if it has not been inserted yet. When every data has been transferred, the process advances to Step **S115.**

In Step **S115,** the first read/write section **2** deletes the PS for dubbing from the HDD **9a.** When the delete operation is finished, the dubbing decision process ends, too.

In this preferred embodiment, when the user finishes viewing and listening to a program for the first time by playing it, he or she is asked about the need of dubbing. This is because once the user has viewed and listened to the program, he or she can decide whether or not to save it. If he or she needs dubbing, a dubbing operation is carried out by copying a PS on the HDD **9a.** This dubbing processing needs no stream analysis processing and can be done much faster than the situation where the decoding and re-encoding processes should be carried out as described above. When the dubbing processing is finished, the PS will be deleted from the HDD **9a.** Optionally, even if the user does not want dubbing, the PS may be regarded as no longer necessary and deleted from the HDD **9a,** too. As a result, the available capacity of the HDD **9a** can be increased.

The recorder **10** may delete a PS but never deletes its associated TS at the same time. The user may decide separately whether the TS should be deleted or not. If the user has changed his or her mind and wishes to save the recorded program on the DVD-RAM **9b** after the PS has been deleted, then a dubbing operation can be performed using the TS. It should be noted, however, that it will take a lot of time in that case because dubbing and re-encoding should be done in parallel after the program has been decoded.

Optionally, the user may also be allowed to decide arbitrarily which stream should be deleted (or saved), no matter whether that stream has been used for dubbing or not. For example, suppose the user has picked a data stream having the highest rate as a stream to save. In that case, even if the stream has been dubbed, the stream will never be deleted after the dubbing operation is finished. In this manner, his or her desired stream data can always be saved on the HDD **9a** even after the dubbing operation is finished.

In the example described above, a single PS is generated for dubbing purposes. Alternatively, multiple streams with mutually different bit rates may be generated and stored on the HDD **9a.** In that case, when a dubbing operation is carried out, a stream to dub can be designated according to the bit rate. Thus, the dubbing operation can be done while striking an adequate balance between the user's desired image quality and the data size of the stream. Also, even if the method of generating only a single PS to dub while a program is being recorded is adopted, the user may also be allowed to specify the bit rate of that PS during the recording operation. As another alternative, multiple types of streams may be generated. For example, not only a PS compliant with the DVD Video Recording standard but also a PS compliant with the DVD Video standard may be generated as well. In that case, either an encoding section for generating a PS compliant with the DVD Video standard or a converting section for converting a PS compliant with the DVD Video Recording standard into a PS compliant with the DVD Video standard may be provided additionally in the recorder **10.**

The time to delete a PS may also be changed appropriately. For example, if a recorded program has never been played for viewing and listening to it for a predetermined period of time, then the program may be regarded as being less likely to be dubbed in the future and only the PS thereof may be deleted. Also, when the remaining capacity of the HDD **9a** becomes equal to or smaller than a certain value, the PS may be deleted one after another on a first come, first go basis (i.e., the oldest PS should be deleted first). By deleting the PS, the available capacity of the HDD **9a** can be increased and capacity to record a new program can be afforded. It should be noted that until the TS of a program is deleted, the user can play the program for viewing and listening to it at any time and generate a PS from the TS and dub it as described above.

In the example described above, the stream to dub is supposed to be a PS. If the destination of the dubbing operation is a DVD, a PS compliant with the DVD-VR standard or the DVD Video standard may be generated. However, the destination of the dubbing operation is not always a DVD. For example, if the destination of the dubbing operation is a Blu-ray Disc, then a stream to dub should be in the TS format. To get high-speed dubbing done on such a storage medium, the MPEG-PS encoding section **4** shown in FIG. **7** just needs to be replaced with an MPEG-TS encoding section and the MPEG-PS decoding section **8** with an MPEG-TS decoding section. The other components may be used as they are as in processing a PS. In this case, if the PS encoding section **4** generates a PS and a TS at the same time as streams to dub, then one of the streams can be dubbed quickly, no matter whether the storage medium inserted is a DVD or a Blu-ray Disc.

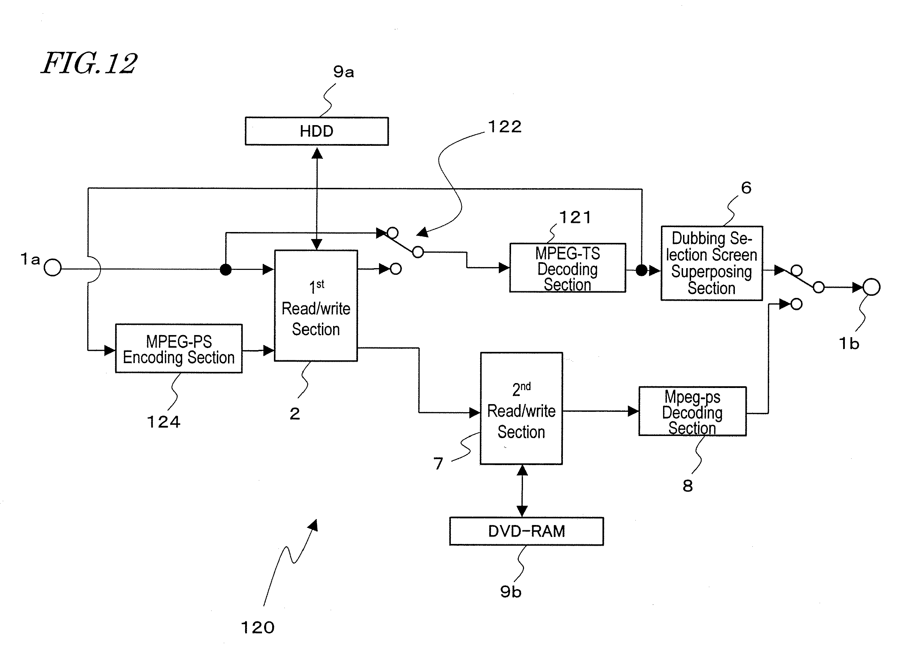

The configuration of the recorder **10** shown in FIG. **7** is just an example and the present invention is in no way limited to that specific preferred embodiment. For example, FIG. **12** shows a modified example of the recorder of the first preferred embodiment. In this recorder **120,** only a TS decoding section **121** decodes a TS. The TS decoding section **121** decodes a TS received and outputs it to the dubbing selection screen superposing section **6** while the user is playing a program for viewing and listening to it or to a PS encoding section **124** while the TS is being converted into a PS. One of these two types of processing is selected using a switch **122** such that the TS decoding section **121** does not perform both playback for viewing and listening and recording at the same time. Compared to the recorder **10** shown in FIG. **7,** the number of decoding sections of the recorder **120** is smaller by one and the size of the circuit to mount can be reduced and the component cost can be cut down, too. However, the functions and operations of the other components are substantially the same as those described above, and the description thereof will be omitted herein.

### EMBODIMENT 2

In the first preferred embodiment described above, a program stream (PS) is generated from a transport stream (TS) received and the TS and the PS are both written on the HDD **9a.**

The second preferred embodiment of the present invention to be described below is processing, in which a TS and a PS are generated based on an analog video signal and an analog audio signal, which have been extracted from an analog broadcasting wave of TV, and written on the HDD **9a.** However, the analog broadcasting wave is just an exemplary signal other than a digital signal including a TS, and the present invention is in no way limited to this specific preferred embodiment.

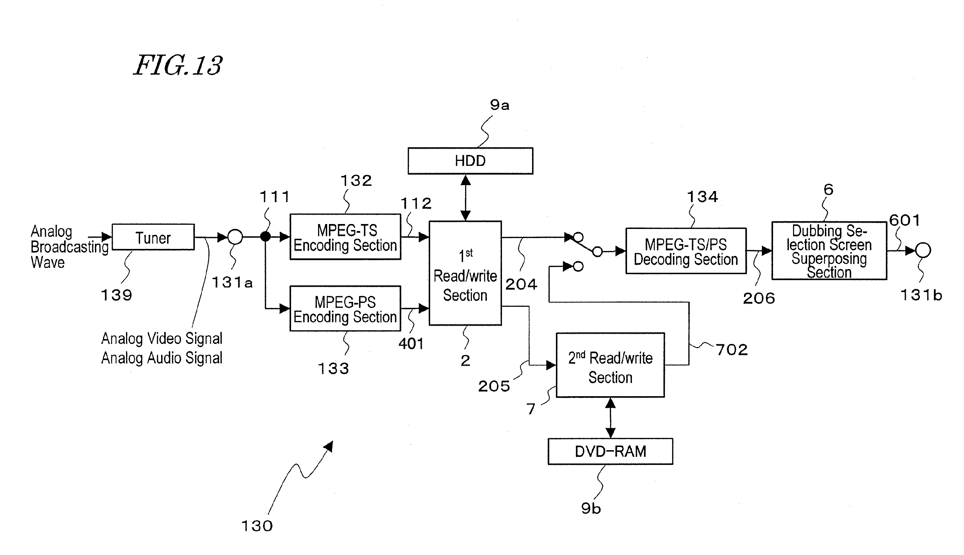

FIG. **13** shows an arrangement of functional blocks in a recorder **130** according to this preferred embodiment. The recorder **130** includes a tuner **139,** an input terminal **131a,** an output terminal **131b,** an MPEG-TS encoding section **132,** an MPEG-PS encoding section **133,** the first read/write section **2,** the HDD **9a,** the second read/write section **7,** an MPEG-TS/PS decoding section **134,** and the dubbing selection screen superposing section **6.** If any of these components of the recorder **130** has the same function as the counterpart of the recorder **10** of the first preferred embodiment, that pair of components will be identified by the same reference numeral and the description thereof will be omitted herein. The following description of this preferred embodiment will be focused on the operation of the recorder **130** and on the functions and operations of those components that are different from the counterparts of the recorder **10.**

First, the operations to be done to record a program will be described. The tuner **139** receives an analog broadcasting wave and outputs an analog video signal and an analog audio signal, both of which are sent to the input terminal **131a.** The input video/audio signal **111** is supplied to both the MPEG-TS encoding section **132** and the MPEG-PS encoding section **133.** The MPEG-TS encoding section (which will be simply referred to herein as a "TS encoding section") **132** generates a TS **112** based on the video/audio signal **111.** On the other hand, the MPEG-PS encoding section (which will be simply referred to herein as a "PS encoding section") **133** generates a PS **401** based on the video/audio signal 111. The first read/write section **2** performs recording-related processing on the TS **112** and the PS **401** and records both of them on the HDD **9a** at the same time. For example, the stream structure of the TS **112** may comply with the Self-Encoding Stream standard for Blu-ray Discs and that of the PS **401** may comply with the DVD-VR standard.

Next, the operations to be done to play a program for viewing and listening will be described. A TS and a PS have been recorded on the HDD **9a** on a program-by-program basis. To play one of those programs for viewing and listening, the TS or the PS thereof, which will have the higher image or sound quality after having been decoded, is read from the HDD **9a** and is subjected to playback-related processing by the first read/write section **2,** thereby outputting a playback stream **204.** The MPEG-TS/PS decoding section **134** performs a decoding process of expanding the compressed data according to the compression method of the playback stream **204,** thereby outputting a baseband signal **206** representing video and/or audio. The video/audio signal **206** is input to the user setting screen superposing section **6.** Only when the user finishes viewing and listening to a recorded program, for which a TS and a PS have been both recorded, the dubbing selection screen superposing section **6** generates a video/audio signal **601,** in which a screen to prompt the user to decide whether he or she wants to dub the program is superposed on the video signal, and outputs the signal **601** through the output terminal **9.** If the user has picked the option of "dubbing needed" by looking at the dubbing selection screen presented, one of the TS and PS recorded (i.e., PS in this case), which matches better to the type of the DVD-RAM **9b** as the destination of the dubbing operation, is read from the HDD **9a,** and subjected to the playback-related processing by the first read/write section **2,** thereby outputting a stream to dub **205.** The second read/write section **7** performs recording-related processing on the stream to dub **205** and then writes it on the DVD-RAM **9b.** The dubbing operation can be done just by transferring the TS or PS that has been generated and recorded in advance from the HDD **9a** to the DVD-RAM **9b.** That is why compared to a situation where one of the TS and PS has been generated in advance and the other is generated later, the dubbing operation can be done in a shorter time. The details of the dubbing selection process are just as already described for the first preferred embodiment.

In playing back a program that has been dubbed on the DVD-RAM **9b** for viewing and listening to it, if the PS has been read from the DVD-RAM **9b,** the second read/write section **7** performs playback-related processing on the PS, thereby outputting a playback stream **702.** The MPEG-TS/PS decoding section **134** performs a decoding process of expanding the compressed data according to the compression method of the playback stream **204,** thereby outputting a baseband signal **206** representing video and/or audio.

In the preferred embodiment described above, a TS or a PS is generated as a stream to dub. Alternatively, multiple streams with mutually different bit rates may be generated and stored on the HDD **9a.** In that case, when a dubbing operation is carried out, a stream to dub can be designated according to the bit rate. Thus, the dubbing operation can be done while striking an adequate balance between the user's desired image quality and the data size of the stream. Those streams may also have either multiple formats of mutually different types or multiple formats of the same type but with mutually different bit rates.

The time to delete the stream to dub may also be changed appropriately. When the remaining capacity of the HDD **9a** becomes equal to or smaller than a certain value, the PS, for example, may be deleted one after another. These methods and their effects are just as already mentioned for the first

### preferred embodiment.

In the first and second preferred embodiments described above, when the user finishes viewing and listening to a program for the first time, he or she is supposed to be asked about the need of dubbing it. When the dubbing operation is finished or after he or she has instructed not to dub the program, the stream to dub is supposed to be deleted. However, the user sometimes cannot decide whether or not to save a program just by viewing and listening to the program only once. In view of such a potential situation, the user may decide on the need of dubbing the program later and may be asked again about the need of dubbing it after a certain amount of time has passed.

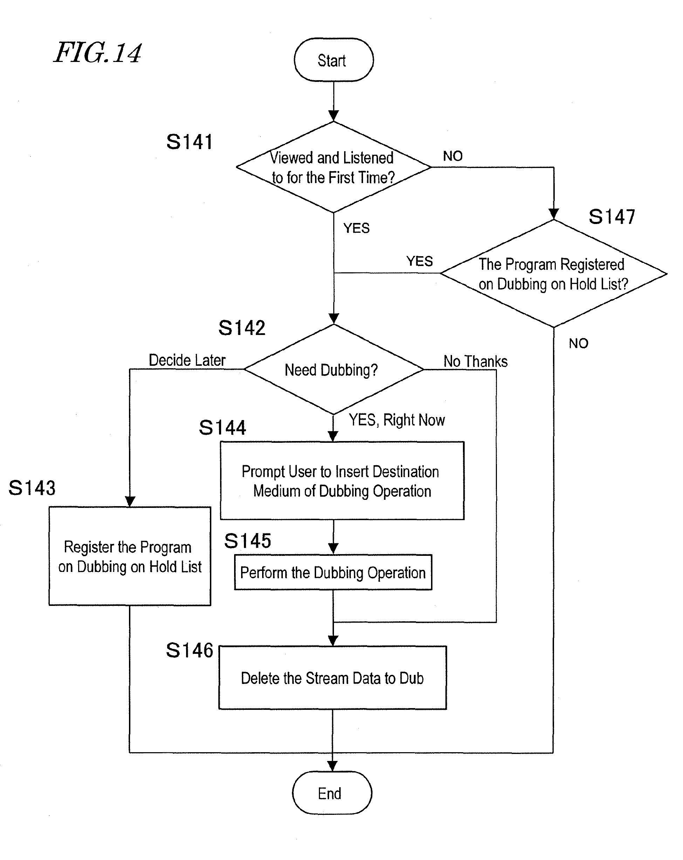

FIG. **14** shows the procedure of a dubbing selection process according to a modified example. Compared to the process shown in FIG. **11,** the contents of the processing step **S142** have been changed and processing steps **S142** and **S147** have been added. The other processing steps are the same as the processing steps **S111** through **S115.**

When the user finishes viewing and listening for the first time, the process advances from Step **S141** to Step **S142,** in which the user is prompted to choose among "dubbing needed", "dubbing not needed" and "decide later" on a dubbing selection screen on the TV **16.** If the user has selected "dubbing needed" or "dubbing not needed" by using a remote controller **16,** for example, the same processing will be carried out as already described with reference to FIG. **11.**

On the other hand, if the user has opted for "decide later", then the first read/write section **2** or a CPU (not shown) registers the recorded program on a dubbing on hold list and manages it as a part of contents on hold in Step **S143.** In this case, the TS and the PS on the HDD **9a** are not deleted but saved there as they are.

Meanwhile, if the user has played back the same program again, then the process advances from Step **S141** to Step **S147,** in which the first read/write section **2** or the CPU (not shown) determines whether or not the program has been registered on the dubbing on hold list. If the answer is YES, the process advances to Step **S142.**

In Step **S142,** when the user finishes viewing and listening to the program, he or she is asked about the need of dubbing it by presenting the dubbing selection screen on the TV **16.** If he or she has opted for "dubbing needed" and when the dubbing operation is finished, the PS to dub will be deleted and that content will be eliminated from the dubbing on hold list. As a result, even in a situation where the user cannot decide whether or not to dub and save a program just by viewing and listening to it only once, if he or she selects "decide later", the program will also be dubbed quickly after he or she has viewed and listened to it once again. On the other hand, if the user has selected "decide later" without choosing "dubbing needed", then the content will continue to be registered as it is.

If the user has opted for "decide later", then the TS and the PS both stay on the HDD **9a** and limit the available storage capacity thereof. The programs that have been registered on the dubbing on hold list may be presented as a list on the TV screen in response to user's manipulations. As a result, the user can delete one of the TS and the PS of a program, which he or she finds no longer worth dubbing, at any time. Alternatively, either when a predetermined amount of time has passed since some program was registered on the dubbing on hold list or when the remaining capacity of the HDD **9a** becomes equal to or smaller than a predetermined capacity (e.g., one third of the overall capacity), the PS to dub that has been on hold may be deleted from the HDD **9a.**

### EMBODIMENT 3

In the first and second preferred embodiments described above, the recorder is supposed to receive a TV broadcasting wave (i.e., a digital broadcasting wave or an analog broadcasting wave).

In a third preferred embodiment of the present invention, however, the recorder receives content's data in a predetermined format over a network. The content may include video and/or audio. In this preferred embodiment, the content is supposed to be music data in the linear PCM (LPCM) format. Such music data will be referred to herein as "LPCM data".

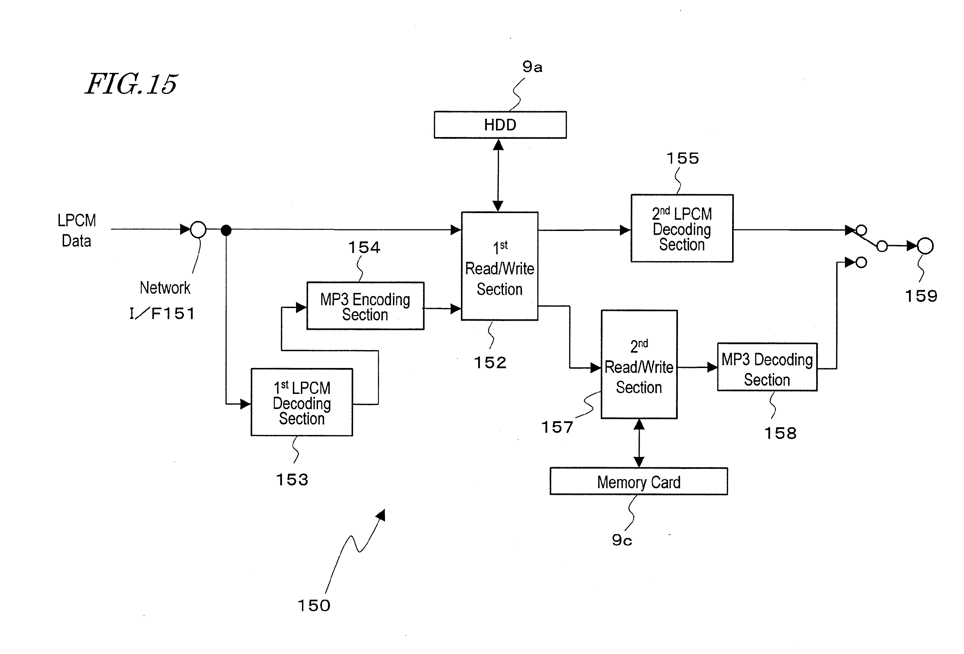

FIG. **15** shows an arrangement of functional blocks in a recorder **150** according to this preferred embodiment. The recorder **150** includes an HDD **9a,** a network interface (I/F) **151,** a first read/write section **152,** a first LPCM decoding section **153,** an MP3 encoding section **154,** a second LPCM decoding section **155,** a second read/write section **157,** an MP3 decoding section **158** and an output terminal **159.**

Comparing the configuration of the recorder **150** to that of the recorder **10** shown in FIG. **7,** it can be seen that these two recorders have similar configurations except that the recorder **150** includes decoding sections and encoding section associated with its own data and coding format to process and has no component corresponding to the dubbing selection screen superposing section **6** because the data to process is music-related data.

The recorder **160** generates music data in the MP3 format (i.e., MP3 data) as a stream to dub. Specifically, the network I/F **151** receives LPCM data from the server **18b** over the Internet **19** shown in FIG. **1.** In response, the first LPCM decoding section **153** decodes the LPCM data into a baseband signal. Subsequently, the MP3 encoding section **154** generates MP3 data based on the baseband signal and sends it to the first read/write section **152,** which writes both the LPCM data and MP3 data on the HDD **9a** in parallel with each other. It should be noted that the data size of the MP3 data has been reduced to less than that of the LPCM data by a non-reversible compression coding process.

To start a playback operation, the first read/write section **152** reads the LPCM data, not the MP3 data, from the HDD **9a** because the LPCM data has higher playback quality than the MP3 data. The second LPCM decoding section **155** decodes the LPCM data and outputs it through the output terminal **159.**

Meanwhile, the user may dub a piece of music that has been stored on the HDD **9a** onto the memory card **9c** and can listen to the music using a portable music player that can deal with playback in the MP3 format. Dubbing can be done by copying the MP3 data from the HDD **9a** onto the memory card **9c.** More specifically, the first read/write section **2** reads the MP3 data from the HDD **9a** and transfers the data to the second read/write section **157,** which then writes the MP3 data on the memory card **9c.** Since the MP3 data has been stored on the HDD **9a** in advance, dubbing can be done quickly for the same reason as that described for the first and second preferred embodiments about copying a PS. Thereafter, the memory card **9c** is inserted into the portable music player.

When the dubbing operation is finished, the first read/write section **152** deletes the MP3 data from the HDD **9a.** Or if the user has instructed that dubbing need not be done, the MP3 data is also deleted. In this manner, the storage capacity of the HDD **9a** can be used effectively. In this preferred embodiment, the dubbing selection screen superposing section **6** (see FIG. **7)** of the first preferred embodiment is not provided because the recorder **150** is designed to process music data. Optionally, a display panel (not shown) may be provided for the recorder **150** so as to pose a question about the need of dubbing thereon. In that case, when the user's response is received by way of the remote controller **11,** for example, it is determined based on the response whether the MP3 data for dubbing should be deleted or not. If necessary, the option of allowing the user to decide on the need of dubbing later as already described with reference to FIG. 14 may be given as well.

When listening to music at home, the user can play back high-quality music based on the LPCM data on the HDD **9a.** In addition, since the MP3 data has been stored in advance on the HDD **9a,** the user can copy the MP3 data quickly to listen to the music outside of his or her home. As dubbing can be done in a short time while the user is busy preparing for leaving home, this function comes in very handy for him or her. Alternatively, the recorder **150** can also play back MP3 data on the memory card **9c.** Specifically, the second read/write section **157** may read the MP3 data from the memory card **9c** and the MP3 decoding section **158** may decode the data and output it through the output terminal **159.** In this manner, the user can also play back the music with this recorder **150.**

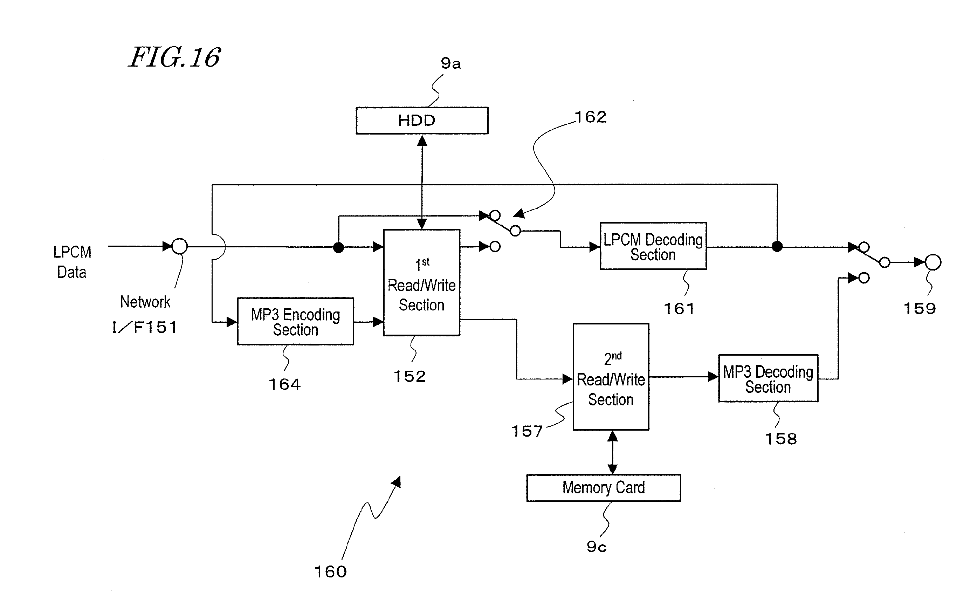

The configuration of the recorder **10** shown in FIG. **15** is just an example and the present invention is in no way limited to that specific preferred embodiment. For instance, FIG. **16** shows a modified example of the recorder of this preferred embodiment. In this recorder **160,** only a single LPCM decoding section **161** decodes LPCM data. The LPCM decoding section **161** decodes LPCM data received and outputs it to the output terminal **159** while the user is playing the music for listening to it or to an MP3 encoding section **164** while the LPCM data is being converted into MP3 data. One of these two types of processing is selected using a switch. Compared to the recorder **150** shown in FIG. **15,** the number of decoding sections of the recorder **160** is smaller by one and the size of the circuit to mount can be reduced and the component cost can be cut down, too. However, the functions and operations of the other components are substantially the same as those described above, and the description thereof will be omitted herein.

Furthermore, in FIGS. **15** and **16,** the LPCM data and MP3 data are supposed to be processed. However, these are just examples, and the present invention is also applicable to processing two types of data in any other combination of formats. For example, the LPCM data may be replaced with data in AC-3, AAC or any other format. In that case, decoding and encoding sections that are compatible with the formats to adopt may be provided. In processing data in the AC-3 format (i.e., AC-3 data), MP3 data is generated from the data in the AC-3 format and the AC-3 data and the MP3 data are written on the HDD **9a.**

FIGS. **15** and **16** illustrate preferred embodiments of distributing music data over a network. However, these preferred embodiments are also applicable to distributing video data over a network. For example, the video data may be distributed in the WMV format, once decoded and then encoded again in the H. 264 format, and both of the data in the WMV format and the data in the H. 264 format may be stored on the HDD **9a.** The data in the H. 264 format, having a smaller size than the data in the WMV format, may be copied onto the memory card **9c.** Optionally, MPEG-2, Dvix and other formats may be adopted as well.

These functions of the recorder may be carried out on a computer program that defines the processing procedures shown in FIGS. **9, 10** and **14.** That is to say, the CPU of the recorder can operate the respective components of the recorder and perform the processing described above by executing such a computer program. The computer program may be stored on a storage medium such as a CD-ROM and put on the market or downloaded over telecommunications lines such as the Internet. Then, a computer system may operate as a device having the same function as the recorder described above.

### INDUSTRIAL APPLICABILITY

A data processor according to the present invention stores a stream to play for viewing and listening and a stream to dub on the same storage medium at the same time (i.e., in parallel with each other). When the user finishes viewing and listening to a program for the first time, the data processor asks him or her about the need of dubbing it. In accordance with the user's instruction, the stream to dub is deleted either when the dubbing operation is finished or when he or she instructs that the program need not be dubbed. Consequently, the recorded program can be dubbed quickly while the capacity of the storage medium in the data processor is used effectively.

## Claims

1. A data processor having ability to write a data stream on each of storage media of first and second types,
wherein first and second data streams in mutually different formats are allowed to be written on the first type of storage medium, while the second data stream is allowed to be written on the second type of storage medium, the data processor comprising:
a receiving section for receiving the first data stream;
a converting section for converting the first data stream into the second data stream;
a processing section for writing the first and second data streams on the first type of storage medium;
a playback section for playing back a content based on the first data stream; and
an instruction receiving section for receiving, from a user, an instruction on whether the content needs to be dubbed or not,
wherein if the user has instructed that the content be dubbed, the processing section reads the second data stream from the first type of storage medium, writes the second data stream on the second type of storage medium, and then deletes the second data stream from the first type of storage medium.

2. The data processor of claim 1, wherein if the user has instructed that the content not be dubbed, the processing section deletes the second data stream from the first type of storage medium.

3. The data processor of claim 1, further comprising a screen generating section for generating and outputting a particular screen to ask the user about the need of dubbing,
wherein the instruction receiving section receives the instruction from the user after the user has been asked on the particular screen about the need of dubbing.

4. The data processor of claim 3, wherein the screen generating section outputs the particular screen after having superposed the particular screen on the content to play back.

5. The data processor of claim 3, wherein the screen generating section generates the particular screen when the content has been played back for the first time.

6. The data processor of claim 1, wherein unless the content starts to be played back within a predetermined amount of time after the first data stream has been written, the processing section deletes the second data stream.

7. The data processor of claim 3, wherein the screen generating section generates a particular screen that further includes an option of allowing the user to decide on the need of dubbing later.

8. The data processor of claim 7, wherein if the instruction receiving section receives, from the user, an instruction that he or she will decide on the need of dubbing later, the processing section registers the content on hold on a list.

9. The data processor of claim 8, wherein when the content that has been registered on the list has been played back, the processing section generates the particular screen, and
wherein if the user has instructed that the content not be dubbed, the processing section deletes the second data stream representing the content that has been played back.

10. The data processor of claim 8, wherein when the remaining capacity of the first type of storage medium becomes equal to or smaller than a predetermined value, the processing section deletes the second data stream representing the content that has been registered on the list.

11. The data processor of claim 1, wherein the first data stream is an MPEG-2 transport stream, and
wherein the second data stream is an MPEG-2 program stream.

12. A data processing method for writing a data stream on each of storage media of first and second types, wherein first and second data streams in mutually different formats are allowed to be written on the first type of storage medium, while the second data stream is allowed to be written on the second type of storage medium, the method comprising the steps of:
receiving the first data stream;
converting the first data stream into the second data stream;
writing the first and second data streams on the first type of storage medium;
playing back a content based on the first data stream; and
receiving an instruction on whether the content needs to be dubbed or not,
wherein if it has been instructed that the content be dubbed, the step of writing includes reading the second data stream from the first type of storage medium, writing the second data stream on the second type of storage medium, and then deleting the second data stream from the first type of storage medium.

13. The data processing method of claim 12, wherein if it has been instructed that the content not be dubbed, the step of writing includes deleting the second data stream from the first type of storage medium.

14. The data processing method of claim 12, further comprising the step of generating and outputting a particular screen to ask a user on the need of dubbing,
wherein the step of receiving the instruction includes receiving the instruction from the user after the user has been asked on the particular screen about the need of dubbing.

15. The data processing method of claim 14, wherein the step of generating and outputting the particular screen includes outputting the particular screen after having superposed the particular screen on the content to play back.

16. The data processing method of claim 14, wherein the step of generating and outputting the particular screen includes generating the particular screen when the content has been played back for the first time.
